# EUROPEAN PATENT SPECIFICATION

(11) **EP 3 821 171 B1**
(45) Date of publication and mention of the grant of the patent: **31.08.2022**
(21) Application number: 19769227.0
(22) Date of filing: 10.07.2019
(51) Int. Cl.: F23C 10/18, F22B 31/00, B21B 43/12, C21D 1/64, F22B 1/04, C21D 1/53, C21D 11/00

(54) **METHOD OF HEAT TRANSFER AND ASSOCIATED DEVICE**
VERFAHREN ZUR WÄRMEÜBERTRAGUNG UND ZUGEHÖRIGE VORRICHTUNG
PROCÉDÉ DE TRANSFERT DE CHALEUR ET DISPOSITIF ASSOCIÉ

(30) Priority: 11.07.2018 WO PCT/IB2018/055109
(43) Date of publication of application: 19.05.2021
(73) Proprietor: ArcelorMittal, 1160 Luxembourg (LU)
(72) Inventor: BANSAL, Akshay, 57000 Metz (FR); BOISSIERE, Benjamin, 57000 Metz (FR); GRIFFAY, Gérard, 57530 Coincy (FR)
(74) Representative: Lavoix
(86) International application number: PCT/IB2019/055879
(87) International publication number: WO 2020/012378

(56) References cited:
- WO-A1-81/02585
- WO-A1-03/029389
- WO-A1-2012/049655
- DE-A1-102009 031 557
- US-A1- 2003 015 150

## Description

The invention is related to a method of heat transfer from a hot flat metal product to a medium and to the associated device.

In steel production, but more generally in metal production, there are several plants wherein hot metal products are manufactured and then allowed to cool down at ambient air. All the released heat from those products is not captured and there is thus a big quantity of energy which is lost to the atmosphere. This is the case for example at the casting plant where steel slabs having a temperature around 900°C are produced and cooled at ambient air while waiting for further processing or transportation. Other products are concerned, such as plates or more generally speaking any flat product having a broad and a small face. There is a need for a method allowing to capture the heat released by such hot metal products.

Patent WO 81/02585 describes a method in which hot metal bars are circulating in a fluidized bed, said fluidized bed capturing heat released by the bars. This method is described for bars and is not suitable for larger products such as slabs.

Patent US 4,351,633 describes a method in which slabs are stacked and sent to a cooling chamber wherein air circulates and capture the heat released by the slab through thermal convection. Heated air is then sent to a series of heat exchangers designed to produce steam for further applications. Convection means require an air circulation device, such as a fan, which consumes a lot of energy and thus decrease the process yield. Moreover, this method implies a big size equipment and a long residence time of the slabs within the equipment because of a low heat exchange coefficient between air and slab.

Patent GB 1 528 863 describes a cooling method of steel products wherein a slab is placed in a slot between two cooling walls made of boiler tubes wherein water is circulating. The heat released by the slab primarily through radiation allows heating of the circulating water in the boiler tubes which at the end of the tube is turned into steam. Once reaching the appropriate temperature the slab is removed from the slot and conveyed to the next process step. This method requires a long cooling time and the heat recovery rate is quite low with a lot of heat losses.

Patent FR 2 996 470 describes a heat capture method by conduction wherein a slab is continuously moving within a chamber which is thermally insulated the chamber comprising radiation and conductions means to recover heat released by the slab such as copper pipes wherein water circulates, those means are located above and below the slabs. This method requires a big size equipment and a big investment to get a fully insulated chamber. There is so a need for a method which overcome the above-mentioned drawbacks.

The method according to the invention allows the transfer of heat from a hot flat metal product to a medium with a high heat recovery rate in a reduced time without detrimental impact on the product, for example on its flatness. Moreover, the method according to the invention requires an equipment which can be easily installed in an existing plant with few invest.

The method according to the invention allows performing a homogeneous cooling of the metal product and has no impact on the quality of the metal product. For example, it neither involves detrimental chemical impact on the metal product, nor has any physical impact on its surface which could create surface defects.

This problem is solved by a method of heat transfer according to independent claim 1.

The method of the invention may also comprise the following optional characteristics considered separately or according to all possible technical combinations:
- the transfer medium is water
- the transfer medium is molten salts,
- said water is used to produce steam,
- the method is performed within a plant having a steam network and said produced steam is injected in said steam network,
- the metal product is a slab or a plate
- the metal product is a steel product,
- the solid particles have a heat capacity comprised between 500 and 2000 J/kg/K,
- the density of the solid particles in the fluidized bed is comprised between 1400 and 4000 kg/m³,
- the solid particles are made of alumina, SiC or steel slag,
- the solid particles have an average size comprised between 30 and 300µm,
- the injection flow rate of the gas is controlled so as to monitor the cooling path of the metal product.,
- the gas is injected at a velocity between 5 and 30cm/s,
- the gas is air,
- the metal product is a slab and said slab is placed on a support within the fluidized bed so that its edge is parallel to the floor,
- the metal product comprises scale particles on its surface, said scale particles being removed by the solid particles and the removed scale particles are regularly extracted from the fluidized bed,
- the transfer medium contains nanoparticles,
- the metal product is cooled from 900 to 350°C in less than 60 minutes.

The invention is also related to a device for heat transfer according to independent claim 14.

The device of the invention may also comprise the following optional characteristics considered separately or according to all possible technical combinations:
- the transfer medium circulating within the heat exchanger is water,
- the device further comprises a device for extracting scale particles,
- the device for extracting scale particles is a movable metallic grid,
- the heat exchanger comprises:
   ∘ At least a first pipe to bring the transfer medium to the heat exchanger
   ∘ At least one second pipe, to recover the transfer medium at the exit of the chamber, and
   ∘ At least one third pipe, connected to the at least first pipe and to the at least one second pipe, said third pipe being in contact with the fluidized bed of solid particles,
- the at least one second pipe is connected to a steam production unit.

The invention will be better understood upon reading the description which follows, given with reference to the following appended figures:
Figure 1 illustrates a slab
Figure 2 illustrates an embodiment of device to perform a heat transfer method according to the invention.
Figure 3 illustrates different fluidization regimes
Figure 4 is curve simulating the thermal behavior of the surfaces and of the center of a slab with a method according to prior art and according to the invention
Figure 5 is a curve simulating the vertical displacement of a slab surface with a method according to the invention and to the prior art and its image representation

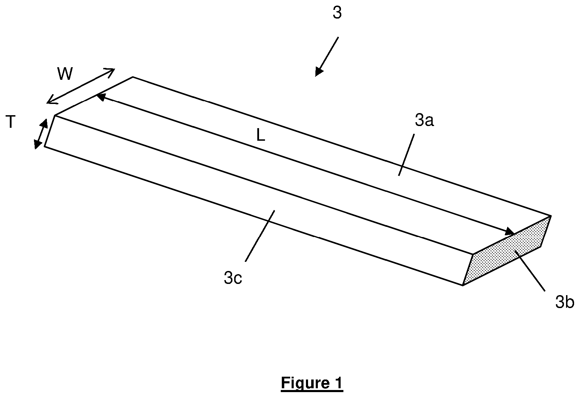

In figure 1 is illustrated a slab 3, which is an example of a flat metal product. Said slab 3 has a parallelepipedal shape and comprises a top 3a and a bottom broad face, two small faces 3b and two edges 3c. The broad faces define the width W and the length L of the slab, said width W being usually comprised between 700 and 2 500 mm, the length L between 5 000 and 15 000 mm and the thickness T of the slab is usually comprised between 150 and 350 mm. More generally, a flat product can be defined as a parallelepiped wherein the smallest dimension (e.g. the thickness T) is negligible compared to the others (e.g. the length L), for example the smallest dimension being at least smaller than the biggest dimension of a factor 15. The broad faces of the parallelepiped are the faces which do not include the smallest dimension. Another example of a flat product is a plate or heavy plate.

Those flat products are usually semi-finished products, which means that they will be subjected to further manufacturing steps before being sold. For those subsequent steps it is important that the product is exempt of defects and notably that its flatness is guaranteed. For example, if a slab has a vertical bending of few millimeters it may raise difficulties during its further rolling or even make it impossible to roll which would imply the discarding of said slab.

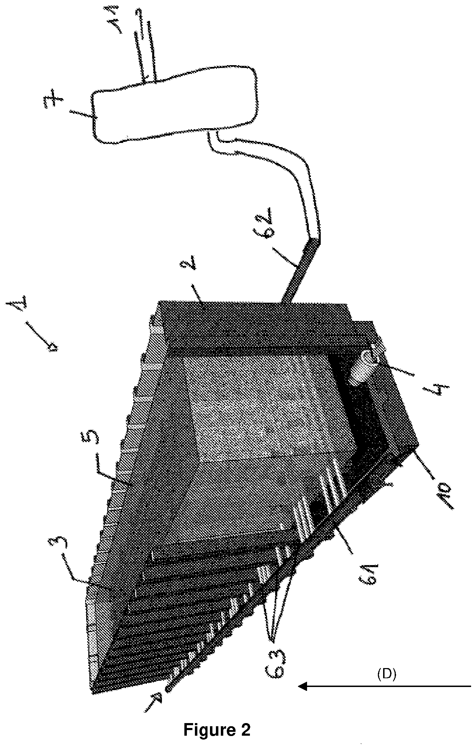

In figure 2 is illustrated a device 1 to perform a heat transfer method according to the invention. This device 1 comprises a chamber 2 wherein hot flat metal products, such as a slab 3, is placed. The chamber 2 may be a closed chamber with a closable opening through which hot flat metal products maybe conveyed, but it could also have an open roof or any configuration suitable for hot flat metal products conveying. Hot flat metal products 3 may be conveyed inside the chamber 2 by a rolling conveyor or maybe placed inside the chamber 2 by pick up means, such as cranes or any suitable pick up mean. The chamber 2 is preferentially able to receive more than one flat product 3.

The chamber 2 contains solid particles and comprises gas injection means 4, gas being injected to fluidize the solid particles and create a fluidized bed of solid particles 5 in a bubbling regime, the solid fluidized particles circulating along a circulation direction (D). The hot flat metal products 3 are placed into the chamber 2 on support means so that their broad face 3a is parallel to the direction (D) of circulation of the fluidized particles. In a preferred embodiment, the direction (D) is vertical and the slab 3 is placed on the support along its edge 3c so that its broad face 3a is parallel to the vertical direction. This allows to promote heat transfer efficiency but also to avoid deformation of the product. The hot flat metal products have a temperature above 400°C when placed into the chamber 2 and are for example slabs or plates and maybe made of steel.

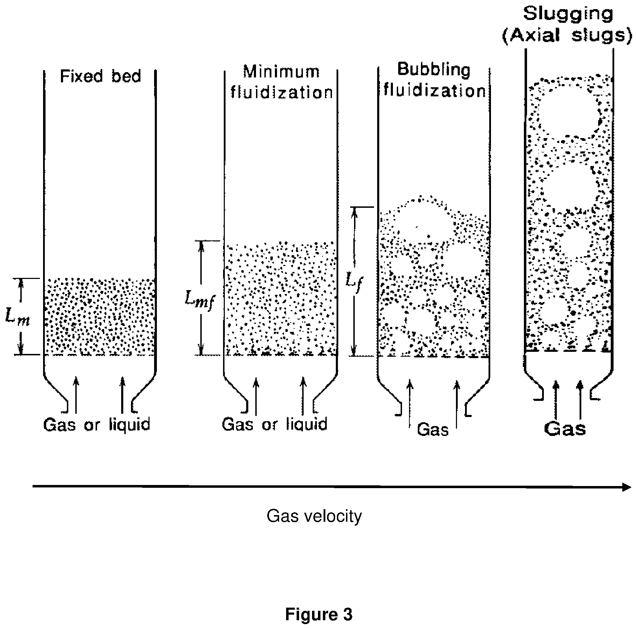

As illustrated in figure 3 there are several regimes of fluidization. Fluidization is the operation by which solid particles are transformed into a fluidlike state through suspension in a gas or a liquid. Depending on the fluid velocity, behavior of the particles is different. In gas-solid systems as the one of the invention, with an increase in flow velocity beyond minimum fluidization, large instabilities with bubbling and channeling of gases are observed. At higher velocities, agitation becomes more violent and the movement of solids become more vigorous. In addition, the bed does not expand much beyond its volume at minimum fluidization. At this stage the fluidized bed is in a bubbling regime, which is the required regime for the invention in order to have a good circulation of the solid particles and a homogeneous temperature of the fluidized bed. Gas velocity to be applied to get a given regime depends on several parameters like the kind of gas used, the size and density of the particles or the size of the chamber 2. This can be easily managed by a man skilled in the art.

The gas can be nitrogen or an inert gas such as argon or helium and in a preferred embodiment, air. It is preferably injected at a velocity between 5 and 30cm/s which requires a low ventilation power and so a reduced energy consumption. In a preferred embodiment the injection flow rate of gas is controlled to monitor the cooling rate of the hot metal products 3. This may be advantageous for metal products whose quality is impacted by cooling rate, such as steel, but also be advantageous for the plant to regulate production.

The solid particles preferentially have a heat capacity comprised between 500 and 2000 J/Kg/K. Their density is preferentially comprised between 1400 and 4000 kg/m³. They maybe ceramic particles such as SiC, Alumina or steel slag. They may be made of glass or any other solid materials stable up to 1000°C. They preferably have a size comprised between 30 and 300µm. These particles are preferably inert to prevent any reaction with the hot metal product 3.

The device 1 further comprises at least one heat exchanger 6 wherein a transfer medium is circulating, the heat exchanger being in contact with the fluidized bed 5. This heat exchanger may be composed, as illustrated in figure 1, of a first pipe 61 wherein a cool transfer medium 10 is circulating so as to bring it to the heat exchanger, a second pipe 62 wherein heated transfer medium 11 is recovered and third pipes 63 going connecting the first pipe 61 and the second pipe 62 and going through the chamber 2 and the fluidized bed 5 wherein the cool transfer medium 11 from the first pipe 61 is heated. With this device 1 the hot metal products 3 are immersed into the fluidized bed 5 of solid particles, solid particles which are then able to capture the heat released by the hot metal products 3. This allows a homogeneous cooling of the metal product, as all parts of the metal product are in contact with the fluidized solid particles. The solid particles are kept in motion by the injection of gas by the injection means 4 and come in contact with the heat exchanger 6 where they release the captured heat to the transfer medium circulating within. The flow rate of transfer medium inside the heat exchanger can be regulated to control the cooling rate, indeed the more medium is circulating inside the heat exchanger, the more heat is released from the solid particles.

In a preferred embodiment the transfer medium 10 circulating in the heat exchanger is pressurized water which, once heated by the heat released by the fluidized solid particles, is turned into steam 11. Pressurized water may have an absolute pressure between 1 and 30 Bar. Pressurized water may then be turned into steam by a flash drum 7 or any other suitable steam production equipment. Preferentially the water remains liquid inside the heat exchanger. The produced steam 11 may then be reused within the metal production plant by injection within the plant steam network, for hydrogen production for example or for RH vacuum degassers or CO₂ gas separation units in the case of a steel plant. Having both steam reuse plant and metal product manufacturing plant within the same network of plant allows to improve the overall energy efficiency of said network.

The transfer medium 10 circulating in the heat exchanger may also be air or molten salts having preferably a phase change between 400 and 800°C which allow to store the capture heat. The transfer medium 10 may comprises nanoparticles to promote heat transfer.

In a further embodiment the metal product 3 may comprise scale particles on its surfaces. By chemical or physical interaction with the solid fluidized particles, those scale particles may be removed from the metal product 3 and drop down at the bottom of the fluidized bed. In such a case the equipment 1 is provided with a scale removal device, such as a removable metallic grid to frequently remove the scale particles from the fluidized bed.

With the method according to the invention metal products may be cooled down from 800°C to 400°C in less than 60 minutes.

The method according to the invention may be performed at the exit of a casting plant or at the exit of a levelling or rolling stand.

The method according to the invention allows a fast and homogeneous cooling of the metal product while recovering at least 90% of the heat released by the metal products without deformation of said product. Moreover, the device according to the invention is quite compact and can be adapted to the available space. As air tightness is not required it does not require a big investment nor a high level of maintenance to remain efficient.

### Examples

### Heat recovery

A simulation was performed to evaluate the amount of heat which could be recovered from a steel slab with a method according to the invention.

In the method according to the invention, four slabs made of a commercial low carbon steel grade and having each a weight of 23 tons are placed in an equipment comprising solid particles of silicon carbide with a density of 320 kg/m³ and a Sauter diameter of 50µm, those particles being fluidized in a bubbling regime thanks to the injection of air at 5 cm/s.

A heat exchanger as the one illustrated in figure 1 using water as fluid was used for the simulation. 2 scenarios were considered, one with an initial slab temperature of 800°C and a cooling up to 400°C and a 2^{nd} scenario with an initial temperature of 550°C and a final one of 250°C. For both scenario energy recovered, and steam quantity and pressure produced were evaluated. Results are presented in table 1.

**Table 1**

| Tᵢₙᵢ (°C) | T_{final} (°C) | Residency time of the slabs | Energy recovered (GJ/slab) | Steam produced (t/slab) | Steam pressure (Bar) |
|---|---|---|---|---|---|
| 800 | 400 | 35 min | 7.41 | 2.25 | 26 |
| 550 | 250 | 35 min | 4.50 | 1.385 | 7 |

Steam pressure is not the same in both scenarios because as the initial temperature of the slabs are not the same, the water from the heat exchangers is not heated at the same temperature.

According to the simulation, almost 95% of the heat released by the slab could be captured thanks to the method according to the invention.

### Product impact

A simulation was performed to evaluate the deformation and the thermal impact of a cooling method according to prior art and according to the invention.

In both scenario A and B, a slab made of a commercial low carbon steel grade and having a length L of 10m, a width W of 1m and a thickness T of 0.25m, is placed in an equipment comprising solid particles of silicon carbide with a density of 320 kg/m³ and a Sauter diameter of 50µm, those particles being fluidized in a bubbling regime thanks to the injection of air at 5 cm/s and circulating vertically, the bottom of the chamber being the horizontal direction.
A heat exchanger as the one illustrated in figure 2 using water as fluid was used for the simulation. In both scenario initial slab temperature is of 800°C and it is cooled up to 400°C. In scenario A the slab is placed in the fluidized bed so that one of its broad face lay down on the support means, its broad faces being thus perpendicular to the direction of circulation of the fluidized particles while in the scenario B it is placed on one of its edges, its broad faces being thus parallel to the direction of circulation of the fluidized particles.

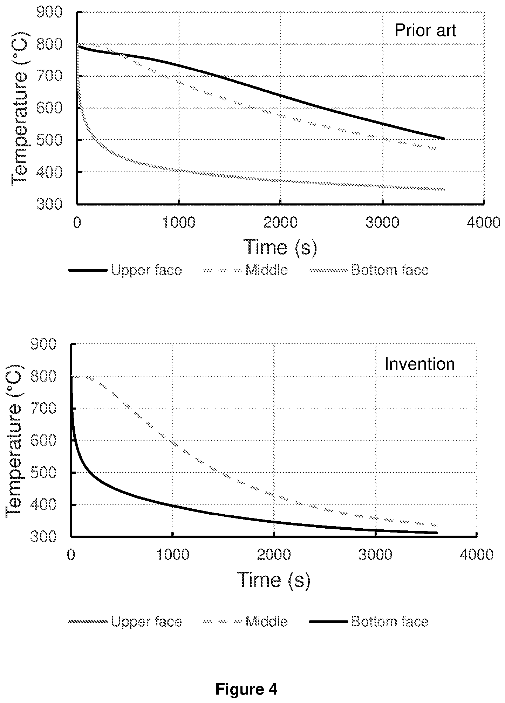

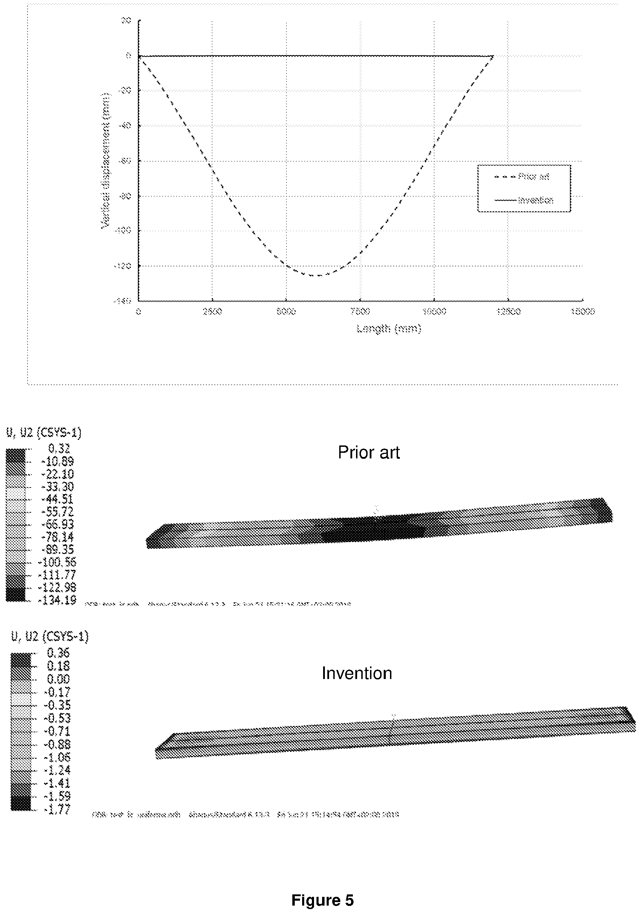

For both scenarios, the temperature evolution of slab at different depths within the thickness T and the deformation of said slab are simulated and illustrated respectively in figure 4 and 5.

In figure 4 is represented the evolution of temperature with time of one point taken on the top broad face, slab center and bottom broad face. It is clear from the simulation that the bottom and the top broad face don't follow the same thermal path, contrary to what happens with a method according to the invention (both curves are superposed, only one is visible).

This an impact on the product, as can be seen on figure 5. This figure represents first the curve of displacement in the vertical direction along the length of the product when cooling with a method according to prior art and a method according to the invention. In the two other pictures this displacement is represented directly on the product and we can see that when using a method according to prior art there is a clear bending of the product which won't come back to its initial flatness.

The method according to the invention allows thus capturing the heat released by the hot flat metal product without detrimental impact on the product and notably without involving a deformation of said product.

## Claims

1. Method of heat transfer wherein a flat metal product having a broad face and a temperature upper to 400°C is put in contact with a fluidised bed of solid particles, said solid particles having a direction of circulation (D), wherein the flat metal product is put in contact with the solid particles so that its broad face is parallel to the direction (D) of circulation of the solid particles and wherein a gas is injected so that said solid particles be in a bubbling regime, said solid particles capturing the heat released by the metal product and transferring said captured heat to a transfer medium.

2. Method according to claim 1 wherein the transfer medium is water.

3. Method according to claim 1 wherein the transfer medium is molten salts.

4. Method according to claim 2 wherein said water is used to produce steam.

5. Method according to anyone of the preceding claims wherein the flat metal product is a steel slab or a steel plate.

6. Method according to anyone of the preceding claims wherein the solid particles have a heat capacity comprised between 500 and 2000 J/kg/K.

7. Method according to anyone of the preceding claims wherein the solid particles are made of alumina, SiC or steel slag.

8. Method according to anyone of the preceding claims wherein the injection flow rate of the gas is controlled so as to monitor the cooling path of the metal product.

9. Method according to anyone of the preceding claims wherein the gas is injected at a velocity between 5 and 30cm/s.

10. Method according to anyone of the preceding claims wherein the gas is air.

11. Method according to anyone of the preceding claims wherein the metal product is a slab and said slab is placed on a support within the fluidised bed so that its edge is parallel to the floor.

12. Method according to anyone of the previous claims wherein the transfer medium contains nanoparticles.

13. Method according to anyone of the preceding claims wherein the metal product is cooled from 800 to 400°C in less than 60 minutes.

14. Device for heat transfer comprising:
a. A chamber 2 comprising a fluidised bed 5 of solid particles, said solid particles capturing the heat released by a flat metal product 3 having a broad face 3a and a temperature upper to 400°C, said solid particles circulating along a circulation direction (D),
b. Gas injection means 4 to inject gas within the chamber 2,
c. A heat exchanger 6 wherein a transfer medium is circulating, the heat exchanger being in contact with the fluidised bed so that the solid particles transfer the captured heat to the transfer medium.
d. Support means to support the flat metal product 3 so that the broad face 3a of the flat metal product 3 is parallel to the circulation direction (D) of the solid particles.

15. Device according to claim 14 further comprising a device for extracting scale particles.

## Patentansprüche

1. Wärmeübertragungsverfahren, wobei ein flaches Metallprodukt, das eine breiten Fläche und eine Temperatur von über 400 °C aufweist, mit einem Wirbelbett aus Feststoffpartikeln in Kontakt gebracht wird, wobei die Feststoffpartikel eine Zirkulationsrichtung (D) aufweisen, wobei das flache Metallprodukt mit den Feststoffpartikeln in Kontakt gebracht wird, sodass seine breite Fläche parallel zu der Zirkulationsrichtung (D) der Feststoffpartikel verläuft, und wobei ein Gas eingespritzt wird, sodass die Feststoffpartikel in einem Blasenbetrieb sind, wobei die Feststoffpartikel die von dem Metallprodukt freigesetzte Wärme aufnehmen und die aufgenommene Wärme an ein Übertragungsmedium übertragen.

2. Verfahren nach Anspruch 1, wobei das Übertragungsmedium Wasser ist.

3. Verfahren nach Anspruch 1, wobei das Übertragungsmedium geschmolzene Salze sind.

4. Verfahren nach Anspruch 2, wobei das Wasser zum Erzeugen von Dampf verwendet wird.

5. Verfahren nach einem der vorherigen Ansprüche, wobei das flache Metallprodukt eine Stahlbramme oder eine Stahlplatte ist.

6. Verfahren nach einem der vorherigen Ansprüche, wobei die festen Partikel eine Wärmekapazität zwischen 500 und 2000 J/kg/K aufweisen.

7. Verfahren nach einem der vorherigen Ansprüche, wobei die festen Partikel aus Aluminiumoxid, SiC oder Stahlschlacke sind.

8. Verfahren nach einem der vorherigen Ansprüche, wobei die Einspritzmenge des Gases gesteuert wird, sodass der Kühlweg des Metallprodukts überwacht wird.

9. Verfahren nach einem der vorherigen Ansprüche, wobei das Gas mit einer Geschwindigkeit zwischen 5 und 30 cm/Sek. eingespritzt wird.

10. Verfahren nach einem der vorherigen Ansprüche, wobei das Gas Luft ist.

11. Verfahren nach einem der vorherigen Ansprüche, wobei das Metallprodukt eine Bramme ist und die Bramme auf einem Träger innerhalb des Wirbelbetts platziert wird, sodass ihre Kante parallel zu dem Boden ist.

12. Verfahren nach einem der vorherigen Ansprüche, wobei das Übertragungsmedium Nanopartikel enthält.

13. Verfahren nach einem der vorherigen Ansprüche, wobei das Metallprodukt in weniger als 60 Minuten von 800 auf 400 °C abgekühlt wird.

14. Wärmeübertragungsvorrichtung, umfassend:
a. eine Kammer (2), umfassend ein Wirbelbett (5) aus Feststoffpartikeln, wobei die Feststoffpartikel die von einem flachen Metallprodukt (3) mit einer breiten Fläche (3a) und einer Temperatur von mehr als 400 °C freigesetzte Wärme auffangen, wobei die Feststoffpartikel entlang einer Zirkulationsrichtung (D) zirkulieren,
b. Gaseinspritzeinrichtungen 4 zum Einspritzen von Gas in die Kammer 2,
c. einen Wärmetauscher 6, in dem ein Übertragungsmedium zirkuliert, wobei der Wärmetauscher in Kontakt mit dem Wirbelbett ist, sodass die festen Partikel die eingefangene Wärme an das Übertragungsmedium abgeben.
d. Trägereinrichtungen, um das flache Metallprodukt 3 zu tragen, sodass die breite Fläche 3a des flachen Metallprodukts 3 parallel zu der Zirkulationsrichtung (D) der festen Partikel ist.

15. Vorrichtung nach Anspruch 14, ferner umfassend eine Vorrichtung zum Absaugen von Zunderpartikeln.

## Revendications

1. Procédé de transfert de chaleur dans lequel un produit métallique plat présentant une large face et une température supérieure à 400°C est mis en contact avec un lit fluidisé de particules solides, lesdites particules solides présentant une direction de circulation (D), dans lequel le produit métallique plat est mis en contact avec les particules solides de sorte que sa large face soit parallèle à la direction (D) de circulation des particules solides et dans lequel un gaz est injecté de sorte que lesdites particules solides soient dans un régime d'effervescence, lesdites particules solides capturant la chaleur libérée par le produit métallique et transférant ladite chaleur capturée à un milieu de transfert.

2. Procédé selon la revendication 1 dans lequel le milieu de transfert est constitué d'eau.

3. Procédé selon la revendication 1, dans lequel le milieu de transfert est constitué de sels fondus.

4. Procédé selon la revendication 2, dans lequel ladite eau est utilisée pour produire de la vapeur.

5. Procédé selon l'une quelconque des revendications précédentes, dans lequel le produit métallique plat est une dalle d'acier ou une plaque d'acier.

6. Procédé selon l'une quelconque des revendications précédentes, dans lequel les particules solides présentent une capacité thermique comprise entre 500 et 2000 J/kg/K.

7. Procédé selon l'une quelconque des revendications précédentes, dans lequel les particules solides sont constituées d'alumine, de SiC ou de scories d'acier.

8. Procédé selon l'une quelconque des revendications précédentes, dans lequel le débit d'injection du gaz est contrôlé de manière à surveiller le chemin de refroidissement du produit métallique.

9. Procédé selon l'une quelconque des revendications précédentes, dans lequel le gaz est injecté à une vitesse comprise entre 5 et 30 cm/s.

10. Procédé selon l'une quelconque des revendications précédentes, dans lequel le gaz est constitué d'air.

11. Procédé selon l'une quelconque des revendications précédentes, dans lequel le produit métallique est une dalle et ladite dalle est placée sur un support à l'intérieur du lit fluidisé de sorte que son bord soit parallèle au sol.

12. Procédé selon l'une quelconque des revendications précédentes, dans lequel le milieu de transfert contient des nanoparticules.

13. Procédé selon l'une quelconque des revendications précédentes, dans lequel le produit métallique est refroidi de 800 à 400°C en moins de 60 minutes.

14. Dispositif de transfert de chaleur comprenant :
a. Une chambre 2 comprenant un lit fluidisé 5 de particules solides, lesdites particules solides capturant la chaleur libérée par un produit métallique plat 3 doté d'une large face 3a et d'une température supérieure à 400°C, lesdites particules solides circulant le long d'une direction de circulation (D),
b. Un moyen d'injection de gaz 4 pour injecter du gaz à l'intérieur de la chambre 2,
c. Un échangeur de chaleur 6 dans lequel un milieu de transfert circule, l'échangeur de chaleur étant en contact avec le lit fluidisé de sorte que les particules solides transfèrent la chaleur capturée au milieu de transfert.
d. des moyens de support pour supporter le produit métallique plat 3 de sorte que la face large 3a du produit métallique plat 3 soit parallèle à la direction de circulation (D) des particules solides.

15. Dispositif selon la revendication 14, comprenant en outre un dispositif d'extraction des particules de tartre.
